(19) Europäisches Patentamt / European Patent Office / Office européen des brevets

(11) **EP 3 785 177 B1**

(12) **EUROPÄISCHE PATENTSCHRIFT**

(45) Veröffentlichungstag und Bekanntmachung des Hinweises auf die Patenterteilung:
**05.07.2023   Patentblatt 2023/27**

(21) Anmeldenummer: **19719232.1**

(22) Anmeldetag: **17.04.2019**

(51) Internationale Patentklassifikation (IPC):
**G06N 3/082** (2023.01)

(52) Gemeinsame Patentklassifikation (CPC):
**G06N 3/082**

(86) Internationale Anmeldenummer:
**PCT/EP2019/059991**

(87) Internationale Veröffentlichungsnummer:
**WO 2019/206775 (31.10.2019 Gazette 2019/44)**

(54) **VERFAHREN UND VORRICHTUNG ZUM ERMITTELN EINER NETZKONFIGURATION EINES NEURONALEN NETZES**

METHOD AND DEVICE FOR DETERMINING A NETWORK-CONFIGURATION OF A NEURAL NETWORK

PROCEDE ET DISPOSITIF POUR DETERMINER UNE CONFIGURATION DE RESEAU D'UN RESEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2018   DE 102018109835**

(43) Veröffentlichungstag der Anmeldung:
**03.03.2021   Patentblatt 2021/09**

(73) Patentinhaber: **Robert Bosch GmbH**
**70442 Stuttgart (DE)**

(72) Erfinder:
• **METZEN, Jan Hendrik**
**71034 Boeblingen (DE)**
• **ELSKEN, Thomas**
**71069 Sindelfingen (DE)**
• **HUTTER, Frank**
**79110 Freiburg (DE)**

(56) Entgegenhaltungen:
**DE-C1- 19 610 849**

• **SMITHSON SEAN C ET AL: "Neural networks designing neural networks: Multi-objective hyper-parameter optimization", 2016 IEEE/ACM INTERNATIONAL CONFERENCE ON COMPUTER-AIDED DESIGN (ICCAD), ACM, 7. November 2016 (2016-11-07), Seiten 1-8, XP033048930, DOI: 10.1145/2966986.2967058 [gefunden am 2017-01-19]**
• **THOMAS ELSKEN ET AL: "Simple And Efficient Architecture Search for Convolutional Neural Networks", ARXIV.ORG, CORNELL UNIVERSITY LIBRARY, 201 OLIN LIBRARY CORNELL UNIVERSITY ITHACA, NY 14853, 13. November 2017 (2017-11-13), XP081287784,**
• **SAYED MOHAMMAD REZA LOGHMANIAN ET AL: "Structure optimization of neural network for dynamic system modeling using multi-objective genetic algorithm", NEURAL COMPUTING AND APPLICATIONS, SPRINGER-VERLAG, LO, Bd. 21, Nr. 6, 1. März 2011 (2011-03-01), Seiten 1281-1295, XP035099413, ISSN: 1433-3058, DOI: 10.1007/S00521-011-0560-3**
• **THOMAS ELSKEN ET AL: "Multi-objective Architecture Search for CNNs", ARXIV.ORG, CORNELL UNIVERSITY LIBRARY, 201 OLIN LIBRARY CORNELL UNIVERSITY ITHACA, NY 14853, 24. April 2018 (2018-04-24), XP081229480,**

**Beschreibung**

Technisches Gebiet

Die Erfindung betrifft neuronale Netze, insbesondere zur Realisierung von Funktionen eines technischen Systems, insbesondere eines Roboters, eines Fahrzeugs, eines Werkzeugs oder einer Werkmaschine. Weiterhin betrifft die Erfindung die Architektursuche von neuronalen Netzen, um eine hinsichtlich eines Vorhersagefehlers und hinsichtlich eines oder mehrerer Optimierungsziele optimierte Konfiguration eines neuronalen Netzes für eine bestimmte Anwendung aufzufinden.

Technischer Hintergrund

Die Eigenschaften von neuronalen Netzen werden maßgeblich durch ihre Architektur bestimmt. Die Architektur eines neuronalen Netzes ist beispielsweise durch dessen Netzkonfiguration definiert, die u.a. durch die Anzahl der Neuronenschichten, die Art der Neuronenschichten (lineare Transformationen, nichtlineare Transformationen, Normalisierung, Verknüpfung mit weiteren Neuronenschichten usw.) und dergleichen gegeben ist. Insbesondere bei zunehmender Komplexität der Anwendungen bzw. der zu lösenden Aufgaben ist das zufällige Auffinden von geeigneten Netzkonfigurationen aufwändig, da jeder Kandidat einer Netzkonfiguration zunächst trainiert werden muss, um dessen Leistungsfähigkeit evaluieren zu können.

Um das Auffinden einer geeigneten Netzkonfiguration zu verbessern, wird in der Regel Expertenwissen angewendet, um die Zahl der Kandidaten für mögliche Netzkonfigurationen vor deren Training zu reduzieren. Auf diese Weise kann eine Suche in einer Teilmenge von sinnvollen Netzarchitekturen vorgenommen werden. Trotz dieses Ansatzes ist die Menge an möglichen Netzkonfigurationen immens.

Da eine Bewertung einer Netzkonfiguration nur nach einem Training, z. B. durch Auswerten eines Fehlerwerts, bestimmt wird, führt dies bei komplexeren Aufgaben und entsprechend komplexen Netzkonfigurationen zu erheblichen Suchdauern für eine geeignete Netzkonfiguration.

Darüber hinaus sind für die meisten praktischen Anwendungen neuronale Netze gefordert, die sowohl bezüglich des Vorhersagefehlers als auch bezüglich mindestens eines weiteren Optimierungsziels, das sich beispielsweise aus Hardwarebeschränkungen und dergleichen ergibt, optimiert sind. Das Dokument SMITHSON ET AL., "Neural networks designing neural networks: Multi-objective hyper-parameter optimization", 2016 IEEE/ACM INTERNATIONAL CONFERENCE ON COMPUTER-AIDED DESIGN (ICCAD), ACM, 7. November 2016, beschreibt ein Verfahren zum Ermitteln einer geeigneten Netzkonfiguration für ein neuronales Netz für eine vorgegebene Anwendung.

Offenbarung der Erfindung

Erfindungsgemäß sind ein Verfahren zum Bestimmen einer Netzkonfiguration für ein neuronales Netz basierend auf Trainingsdaten für eine gegebene Anwendung gemäß Anspruch 1 sowie eine entsprechende Vorrichtung gemäß Anspruch 12, ein Computerimplementiertes Verfahren zum Bereitstellen eines neuronalen Netzes gemäß Anspruch 10, ein Verwendung eines Computerimplementierten neuronalen Netzes gemäß Anspruch 11, ein Computerprogramm gemäß Anspruch 13, und ein Elektronisches Speichermedium gemäß Anspruch 14.

Weitere Ausgestaltungen sind in den abhängigen Ansprüchen angegeben.

Ein Ziel des obigen Verfahrens besteht darin, eine Menge von Netzkonfigurationen zu finden, die eine verbesserte Auswahlmöglichkeit darstellt, eine optimierte Netzkonfiguration eines neuronalen Netzes bezogen auf eine vorgegebene Anwendung aufzufinden. Insbesondere ist dazu wünschenswert, die in Frage kommenden Netzkonfigurationen so auszuwählen, dass diese hinsichtlich eines Vorhersagefehlers und eines oder mehrerer weiterer Optimierungsziele optimiert sind, so dass je nach Ermessen eine geeignete Netzkonfiguration aus der aufgefundenen Menge von Netzkonfigurationen ausgewählt werden kann. Der Kern des obigen Verfahrens besteht darin, eine optimierte Pareto-Menge von geeigneten Netzkonfigurationen hinsichtlich eines Vorhersagefehlers und eines oder mehrerer weiterer Optimierungsziele in möglichst ressourcenschonender Weise zu ermitteln.

Die Pareto-Menge von Netzkonfigurationen entspricht denjenigen Netzkonfigurationen, bei denen das betreffende neuronale Netz nicht hinsichtlich aller Optimierungsziele durch eine andere Netzkonfiguration dominiert wird. Mit anderen Worten, die Pareto-Menge von Netzkonfigurationen entspricht denjenigen Netzkonfigurationen, die so ausgewählt sind, das jede der Netzkonfigurationen mindestens hinsichtlich des Vorhersagefehlers oder hinsichtlich mindestens eines des einen oder der mehreren weiteren Optimierungsziele besser ist als jede der übrigen Netzkonfigurationen. Insbesondere soll in der vorliegenden Erfindung eine Pareto-Menge bezüglich des Vorhersagefehlers und bezüglich des mindestens einen weiteren Optimierungsziels ermittelt werden, um eine reduzierte Auswahlmenge für Netzkonfigurationen zu erhalten.

Das obige Verfahren ermöglicht es, die Auswahl von möglichen Netzkonfigurationen, die hinsichtlich des Vorhersagefehlers und hinsichtlich eines oder mehrerer weiterer Optimierungsziele optimiert sind, auszuwählen, um für eine gegebene Anwendung eine geeignete Netzkonfiguration für ein neuronales Netz zu finden. Da die Bestimmung des Vorhersagefehlers ein jeweiliges Training des neuronalen Netzes entsprechend eines Netzkonfigurationskandidaten erfordert, sieht das obige Verfahren zudem vor, die Netzkonfigurationskandidaten für das Training gemäß einer Vorauswahl in geeigneter Weise auszuwählen. Dabei erfolgt die Auswahl entsprechend einer Wahrscheinlichkeitsverteilung, die Netzkonfiguration für Kostenwerte des einen oder der mehreren Optimierungsziele zu präferieren, für die noch keine oder bessere Netzkonfiguration hinsichtlich der Vorhersagegenauigkeit evaluiert worden ist. Auf diese Weise ergeben sich Netzkonfigurationsvarianten entlang einer Pareto-Menge, die eine optimierte Auswahlmöglichkeit hinsichtlich der konkreten Anwendung bereitstellt. Dabei kann ein Experte entsprechend einer Gewichtung der Optimierungsziele eine entsprechende Auswahl einer geeigneten Netzkonfiguration treffen.

Weiterhin können die Schritte a) bis e) iterativ mehrfach durchgeführt werden.

Insbesondere kann das Verfahren beendet werden, wenn eine Abbruchbedingung erfüllt ist, wobei die Abbruchbedingung das Eintreten mindestens eines der folgenden Ereignisse beinhaltet:

- eine vorbestimmte Anzahl von Iterationen wurde erreicht,
- ein vorbestimmter Vorhersagefehlerwert durch mindestens eine der Netzkonfigurationsvarianten wurde erreicht.

Es kann vorgesehen sein, dass diejenigen Netzkonfigurationen aus der Menge von Netzkonfigurationsvarianten ausgewählt werden, die abhängig von der Wahrscheinlichkeitsverteilung der Netzkonfigurationen der aktuellen Netzkonfigurationsmenge die geringsten Wahrscheinlichkeiten aufweisen.

Beispielsweise können die Netzkonfigurationen aus der Menge von Netzkonfigurationsvarianten abhängig von einer aus der aktuellen Netzkonfigurationsmenge ermittelten Dichteschätzung, insbesondere einer Kerndichteschätzung, ausgewählt werden.

Gemäß einer Ausführungsform können die Trainingsdaten durch Eingangsgrößenvektoren und diesen zugeordneten Ausgangsgrößenvektoren vorgegeben sein, wobei derVorhersagefehler der jeweiligen Netzkonfiguration als ein Maß bestimmt wird, dass sich aus den jeweiligen Abweichungen zwischen Modellwerten, die sich durch das durch die jeweilige Netzkonfiguration bestimmten neuronalen Netzes basierend auf den Eingangsgrößenvektoren ergeben, und den den Eingangsgrö-ßenvektoren zugeordneten Ausgangsgrößenvektoren ergibt.

Weiterhin können die Vorhersagefehler für die ausgewählten Netzkonfigurationen durch ein Trainieren mit den Trainingsdaten unter gemeinsamen vorbestimmten Trainingsbedingungen ermittelt werden, wobei die gemeinsam vorbestimmten Trainingsbedingungen eine Anzahl von Trainingsdurchläufen und/oder eine Trainingszeit und/oder eine Trainingsmethode vorgeben.

Weiterhin wird die geeignete Netzkonfiguration aus der aktuellen Netzkonfigurationsmenge basierend auf einer Gesamtkostenfunktion ausgewählt, die von dem Vorhersagefehler und Ressourcenkosten hinsichtlich des mindestens einen Optimierungsziels abhängt.

Gemäß einer Ausführungsform kann das Aktualisieren der aktuellen Netzkonfigurati-onsmenge so durchgeführt werden, dass eine aktualisierte Netzkonfigurationsmenge nur diejenigen Netzkonfigurationen aus der aktuellen Netzkonfigurationsmenge und aus den ausgewählten Netzkonfigurationen enthält, die bezüglich des Vorhersagefehlers und mindestens eines des einen oder der mehreren Optimierungsziele besser sind als jede der übrigen Netzkonfigurationen.

Weiterhin kann das Aktualisieren der aktuellen Netzkonfigurationsmenge durchgeführt werden, indem der aktuellen Netzkonfigurationsmenge die ausgewählten Netzkonfigurationen hinzugefügt werden, um eine erweiterte Netzkonfigurationsmenge zu erhalten, und anschließend aus der erweiterten Netzkonfigurationsmenge diejenigen Netzkonfigurationen entfernt werden, die bezüglich des Vorhersagefehlers und aller der einen oder der mehreren Optimierungsziele schlechter sind als mindestens eine der übrigen Netzkonfigurationen, um die aktualisierte Netzkonfigurationsmenge zu erhalten.

Gemäß Anspruch 10 ist ein Verfahren zum Bereitstellen eines neuronalen Netzes mit einer Netzkonfiguration vorgesehen, die mit dem obigen Verfahren ermittelt worden ist, wobei das neuronale Netz insbesondere zur Realisierung von Funktionen eines technischen Systems, insbesondere eines Roboters, eines Fahrzeugs, eines Werkzeugs oder einer Werkmaschine ausgelegt ist.

Gemäß Anspruch 11 ist eine Verwendung eines neuronalen Netzes mit einer Netzkonfiguration, die mit dem obigen Verfahren für die vorgegebene Anwendung erstellt worden ist, für die vorgegebene Anwendung, wobei das neuronale Netz insbesondere zur Realisierung von Funktionen eines technischen Systems, insbesondere eines Roboters, eines Fahrzeugs, eines Werkzeugs oder einer Werkmaschine ausgelegt ist.

Gemäß Gemäß Anspruch 12 ist eine Vorrichtung zum Ermitteln einer geeigneten Netzkonfiguration für ein neuronales Netz für eine vorgegebene Anwendung, insbesondere Funktionen eines technischen Systems, insbesondere eines Roboters, eines Fahrzeugs, eines Werkzeugs oder einer Werkmaschine vorgesehen.

Kurzbeschreibung der Zeichnungen

Ausführungsformen werden nachfolgend anhand der beigefügten Zeichnungen näher erläutert. Es zeigen:

Figur 1 eine schematische Darstellung eines beispielhaften neuronalen Netzes;
Figur 2 eine mögliche Netzkonfiguration eines neuronalen Netzes;
Figur 3 ein Flussdiagramm zur Darstellung eines Verfahrens zum Ermitteln einer pareto-optimalen Menge von Netzkonfigurationen für das Ermitteln eines geeigneten Netzkonfigurationskandidaten für eine vorgegebene Anwendung;
Figur 4 eine schematische Darstellung einer Pareto-Front von Netzkonfigurationen abhängig von dem Vorhersagefehler und einem weiteren Optimierungsparameter, insbesondere einem Ressourcen-Nutzungsparameter.

Beschreibung von Ausführungsformen

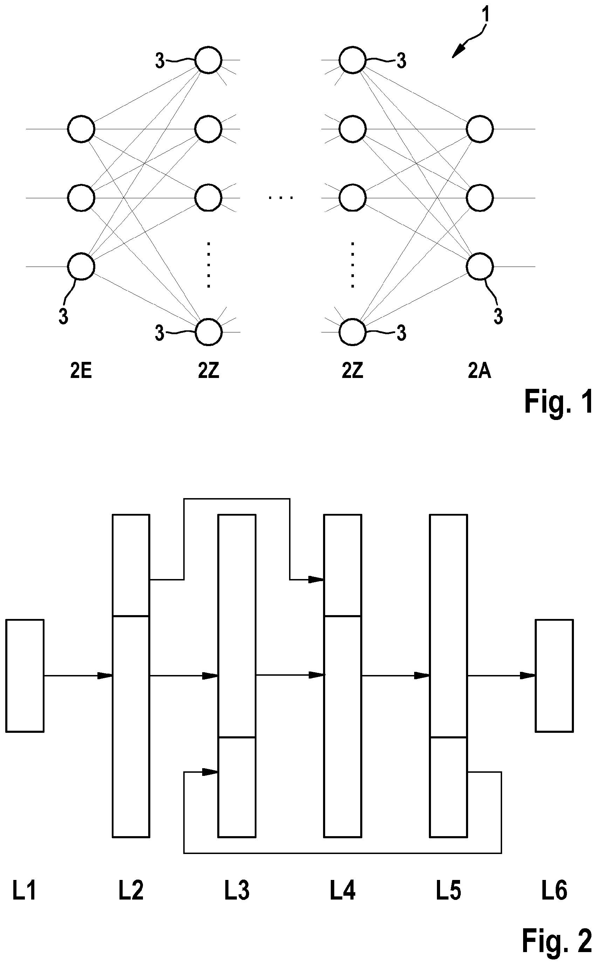

Figur 1 zeigt grundsätzlich den Aufbau eines neuronalen Netzes 1, das in der Regel aus mehreren kaskadierten Neuronenschichten 2 von jeweils mehreren Neuronen 3 aufweist. Die Neuronenschichten 2 weisen eine Eingangsschicht 2E zum Anlegen von Eingangsdaten, mehrere Zwischenschichten 2Z und eine Ausgangsschicht 2A zum Ausgeben von Berechnungsergebnissen auf.
Die Neuronen 3 der Neuronenschichten 2 können dabei einer herkömmlichen Neuronen-Funktion

$$O_j = \varphi\left(\sum_{i=1}^{M}\left(x_i w_{i,j}\right) - \theta_j\right)$$

entsprechen, wobei $O_j$ dem Neuronenausgang des Neurons, $\varphi$ der Aktivierungsfunktion, $x_i$ dem jeweiligen Eingangswert des Neurons, $w_{i,j}$ einem Gewichtungsparameter für den i-ten Neuroneneingang in der j-ten Neuronenschicht und $\theta_j$ einer Aktivierungsschwelle entsprechen. Die Gewichtungsparameter, die Aktivierungsschwelle und die Wahl der Aktivierungsfunktion können als Neuronenparameter in Registern des Neurons gespeichert sein.
Die Neuronenausgänge eines Neurons 3 können jeweils als Neuroneneingänge an Neuronen 3 der übrigen Neuronenschichten, d. h. einer der nachfolgenden oder einer der vorangehenden Neuronenschichten 2, weitergegeben oder, wenn es sich um ein Neuron 3 der Ausgangsschicht 2A handelt, als ein Berechnungsergebnis ausgegeben werden.
So gebildete neuronale Netze 1 können als Software oder mithilfe einer Berechnungshardware realisiert sein, die einen Teil oder das gesamte neuronale Netz als elektronische (integrierte) Schaltung abbildet. Eine solche Berechnungshardware wird üblicherweise dann zum Aufbau eines neuronalen Netzes gewählt, wenn die Berechnung sehr schnell erfolgen soll, was mit Umsetzung in Software nicht zu erreichen wäre.
Die Struktur der entsprechenden Software oder Hardware wird durch die Netzkonfiguration vorgegeben, die durch eine Vielzahl von Konfigurationsparametern bestimmt ist. Die Netzkonfiguration bestimmt die Berechnungsvorschriften des neuronalen Netzes. Die Konfigurationsparameter umfassen bei einer herkömmlichen Netzkonfiguration, wie sie beispielsweise in Figur 1 schematisch gezeigt ist, die Anzahl der Neuronenschichten, die jeweilige Anzahl von Neuronen in jeder Neuronenschicht, die Netzparameter, die durch die Gewichtungen, die Aktivierungsschwelle sowie eine Aktivierungsfunktion gegeben sind, Angaben zur Kopplung eines Neurons mit Eingangs- und Ausgangsneuronen und dergleichen.
Abgesehen von der oben beschriebenen Netzkonfiguration sind weitere Konfigurationen von neuronalen Netzen möglich, bei der Neuronen vorgesehen sind, die eingangsseitig mit Neuronen aus verschiedenen Neuronenschichten und ausgangsseitig mit Neuronen verschiedener Neuronenschichten gekoppelt sind. Weiterhin können diesbezüglich insbesondere auch Neuronenschichten vorgesehen sein, die eine Rückkopplung vorsehen, d. h. die eingangsseitig mit Neuronenschichten, die bezüglich des Datenflusses ausgangsseitig der betreffenden Neuronenschicht vorgesehen sind. Diesbezüglich zeigt Figur 2 schematisch eine mögliche Konfiguration eines neuronalen Netzes mit mehreren Schichten L1 bis L6, die zunächst in an sich bekannter Weise, wie in Figur 1 schematisch dargestellt, miteinander gekoppelt sind, d.h. Neuroneneingänge sind mit Neuronenausgängen der vorangehenden Neuronenschicht verbunden. Ferner weist die Neuronenschicht L3 einen Bereich auf, der eingangsseitig mit Neuronenausgängen der Neuronenschicht L5 gekoppelt ist. Auch kann die Neuronenschicht L4 vorsehen, eingangsseitig mit Ausgängen der Neuronenschicht L2 verbunden zu sein.
Im Folgenden soll ein Verfahren zum Bestimmen einer optimierten Netzkonfiguration für ein neuronales Netz basierend auf einer vorbestimmten Anwendung durchgeführt werden. Die Anwendung bestimmt sich im Wesentlichen durch die Größe von Eingangsgrößenvektoren und der diesen zugeordneten Ausgangsgrößenvektoren, die die Trainingsdaten darstellen, die ein gewünschtes Netzwerkverhalten bzw. eine bestimmte Aufgabenstellung definieren.

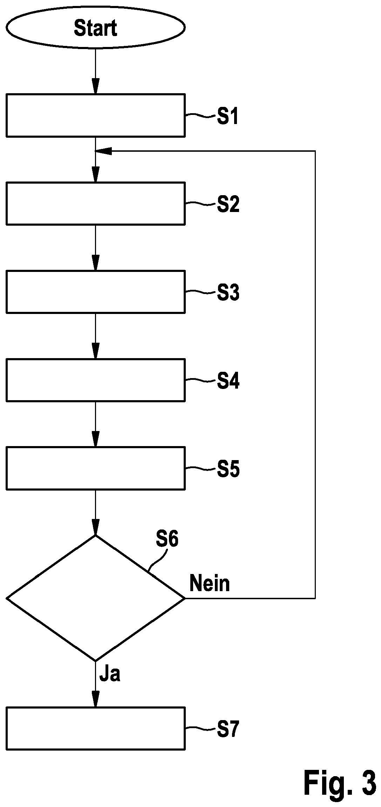

In Figur 3 ist ein Verfahren zum Ermitteln einer Menge von geeigneten Netzkonfigurationen für ein neuronales Netz bezogen auf eine gewünschte Anwendung beschrieben. Die so erhaltene Menge soll dazu dienen, die Auswahl einer Netzkonfiguration für die gewünschte Anwendung zu erleichtern. Die Netzkonfiguration soll daher ein neuronales Netz angeben, das für eine bestimmte Anwendung einsetzbar und geeignet ist und hinsichtlich eines Vorhersagefehlers und zusätzlich hinsichtlich mindestens eines weiteren Optimierungsziels optimiert ist. Insbesondere soll die Menge an Netzkonfigurationen einer Pareto-Front bzw. einer Pareto-Menge von Netzkonfigurationen entsprechen, die hinsichtlich des Vorhersagefehlers und des mindestens einen weiteren Optimierungsziels optimiert sind.

Ziel der Erfindung ist es, die Pareto-Front der Funktion

$$\mathfrak{f}(N) = (error(N), f(N))^T \ \in \mathbb{R} \times \mathbb{R}^n$$

zu approximieren. Dabei ist N ein neuronales Netz, error(N) der Vorhersagefehler des neuronalen Netzes bezogen auf Validierungsdaten , die eine Anwendung beschreiben, und f(N) eine beliebige N-dimensionale Funktion, die die benötigten Ressourcen des neuronalen Netzes N in Form von Kosten der jeweiligen Ressource (Ressourcenkosten) beschreibt, d. h. Ressourcenkosten bezüglich eines oder mehrerer zu dem Vorhersagefehler zusätzlichen Optimierungsziele darstellt. Die zusätzlichen Optimierungsziele sind Eigenschaften der Ressource zur Berechnungshardware und betreffen eine Speichergröße, eine Auswertungsgeschwindigkeit, eine Kompatibilität bezüglich spezieller Hardware, oder einen Auswertungsenergieverbrauch. Das Verfahren berücksichtigt, dass die Auswertung des Vorhersagefehlers sehr aufwendig ist, da es das Trainieren des neuronalen Netzes der Netzkonfigurationen erfordert. Dagegen stellt es einen erheblich geringeren Aufwand dar, f(N) bezogen auf das mindestens eine zusätzliche Optimierungsziel auszuwerten, da dazu kein Training des neuronalen Netzes N erforderlich ist.

Das nachfolgend in Verbindung mit Figur 3 beschriebene Verfahren approximiert in iterativer Weise die Pareto-Front der obigen Funktion.

In Schritt S1 wird eine Menge von Netzkonfigurationen, die eine vorgegebene Anfangs-Pareto-Front $P_1$, d.h. eine aktuelle Menge an Netzkonfigurationen, darstellt, bereitgestellt. Die Netzkonfigurationen entsprechen jeweils einem neuronalen Netz mit einer bestimmten Netzarchitektur. Das betreffende neuronale Netz kann ein herkömmliches neuronales Netz, ein konvolutionelles neuronales Netz oder beliebige andere lernfähige Netze, wie z.B. rekurrente neuronale Netzwerke, umfassen.

Ausgehend von der aktuellen Menge von Netzkonfigurationen werden in Schritt S2 mit weitere/neue Netzwerkkonfigurationen, d.h. Varianten von Netzkonfigurationen, ermittelt werden. Diese können beispielsweise durch Anwendung von verschiedenen Netzwerkmorphismen auf eine oder mehrere der Netzkonfigurationen Varianten von Netzwerkkonfigurationen ermittelt werden oder zufällig ausgewählt werden. Grundsätzlich kann die Generierung der Varianten von Netzkonfigurationen auf im Wesentlichen beliebige Weise erfolgen.

Die Netzwerkmorphismen entsprechen vorbestimmten Regeln, die mithilfe eines Operators bestimmt sein können. Allgemein ist ein Netzwerkmorphismus ein Operator T, der ein neuronales Netz N auf ein Netz TN abbildet, wobei gilt:

$$N^w(x) = (TN)^{\tilde{w}}(x) \text{ für } x \in X$$

dabei sind w die Netzparameter (Gewichtungen) des neuronalen Netzes N und $\tilde{w}$ die Netzparameter des variierten neuronalen Netzes TN. X entspricht dem Raum, auf dem das neuronale Netz angewendet wird

Durch die Variationen der Netzkonfigurationen der aktuellen Netzkonfigurationsmenge des Schritts S2 erhält man k Netzkonfigurationsvarianten. Die Netzkonfigurationsvarianten können auch auf andere Weise erzeugt werden, insbesondere auch unabhängig von der jeweils aktuellen Netzkonfigurationsmenge.

Aus der Anzahl k der Netzwerkkonfigurationsvarianten wird in Schritt S3 eine Untermenge von j Netzkonfigurationen ausgewählt. Die Auswahl wird basierend auf einer Dichteschätzung, insbesondere einer Kerndichteschätzung (Kernel Density Estimator) $p_{kde}$ abhängig von der aktuellen Pareto-Front $P_i$ der für $\{f(N)|N \in P_i\}$ berechnet. Alternative Dichteschätzverfahren umfassen parametrische Dichte-Modelle (bspw. gaussian mixture model) oder ein Histogramm.

Die Kerndichteschätzung ist ein statistisches Verfahren zur Schätzung der Wahrscheinlichkeitsverteilung einer Zufallsvariablen. Die Kerndichteschätzung stellt hier entsprechend eine Funktion $p_{kde}$ dar, mit der ein Wahrscheinlichkeitsmaß des Auftretens einer bestimmten Netzkonfiguration basierend auf einer Wahrscheinlichkeitsverteilung, die durch die Netzkonfigurationen der aktuellen Netzkonfigurationsmenge bestimmt wird, angegeben wird.

Die Auswahl der Untermenge der Netzkonfigurationen wird dann zufällig nach einer Wahrscheinlichkeitsverteilung p, die antiproportional zu $p_{kde}$ ist, ausgewählt, d. h. die Wahrscheinlichkeit, dass ein neuronales Netz N zu den k Netzkonfigurationen gehört, entspricht

$$p(N) = c/p_{kde}(N))$$

wobei c lediglich eine Konstante zur Normalisierung der Wahrscheinlichkeitsverteilung darstellt. Anstelle der obigen Beziehung kann auch eine andere Beziehung verwendet werden, die der Bedingung genügt:

$$p_{kde}(f(N1)) < p_{kde}(f(N2)) \rightarrow p(N1) >= p(N2)$$

Ist der Kerndichteschätzwert der Kerndichteschätzung $p_{kde}(f(N^*))$ für eine ausgewählte der Netzkonfigurationsvarianten N* groß, was der Fall ist, wenn bereits viele Netzkonfigurationen der aktuellen Netzkonfigurationsmenge denselben Wert von ungefährf(N) besitzen, wird die betreffende Netzkonfigurationsvariante N* diesen Wert wahrscheinlich nicht weiter verbessern. Ist der Kerndichteschätzwert der Kerndichteschätzung $p_{kde}(f(N^*))$ für eine ausgewählte der Netzkonfigurationsvarianten N* klein, was der Fall ist, wenn sehr wenige Netzkonfigurationen der aktuellen Netzkonfigurationsmenge denselben Wert von ungefähr f(N) besitzen, ist die Wahrscheinlichkeit, dass die betreffende Netzkonfigurationsvariante N* diesen Wert verbessert, groß. Das heißt, es werden aus den Netzkonfigurationsvarianten Netzkonfigurationen ausgewählt, die eine höhere Wahrscheinlichkeit besitzen, zur Pareto-Front der aktuellen Netzkonfigurationsmenge zu gehören bzw. die Approximation zu verbessern.

Das Auswerten von f(N) ist sehr einfach und mit geringem Rechenaufwand durchzuführen, so dass die jeweils aktuelle Menge an Netzkonfigurationsvarianten sehr groß gewählt werden kann. Die Anzahl der daraus ausgewählten Netzkonfigurationen bestimmt darin maßgeblich den Rechenaufwand, da diese trainiert werden müssen, um den jeweiligen Vorhersagefehler zu ermitteln.

In einem nachfolgenden Schritt S4 werden die ausgewählten Netzkonfigurationen mit identischen Trainingsdaten unter vorbestimmten Trainingsbedingungen trainiert und die entsprechenden Vorhersagefehler bestimmt.

Beim Trainieren der durch die Netzkonfigurationsvarianten vorgegebenen neuronalen Netze werden soll ein identisches Bewertungsmaß erhalten werden. Daher erfolgt das Trainieren der neuronalen Netze aller Netzkonfigurationen für eine vorbestimmte Anzahl von Trainingszyklen und einem vorbestimmten Trainingsalgorithmus.

In Schritt S5 wird die Aktualisierung der Pareto-Front entsprechend der ermittelten Vorhersagefehler und den Ressourcenkosten hinsichtlich des einen oder der mehreren weiteren Optimierungsziele durchgeführt. Die Aktualisierung der Pareto-Front $P_i$ mit den Netzkonfigurationen der aktuellen Menge von Netzkonfigurationen erfolgt so, dass der aktuellen Netzkonfigurationsmenge die ausgewählten Netzkonfigurationen hinzugefügt werden, um eine erweiterte Netzkonfigurationsmenge zu erhalten, und anschließend aus der erweiterten Netzkonfigurationsmenge diejenigen Netzkonfigurationen entfernt werden, die bezüglich des Vorhersagefehlers und aller der einen oder der mehreren Optimierungsziele schlechter sind als mindestens eine der übrigen Netzkonfigurationen.

In einem nachfolgenden Schritt S6 wird überprüft, ob eine Abbruchbedingung erfüllt ist. Ist dies der Fall (Alternative: Ja), wird das Verfahren mit Schritt S7 fortgesetzt, anderenfalls (Alternative: Nein) wird zu Schritt S2 zurückgesprungen. Die Abbruchbedingung kann umfassen:

- eine vorbestimmte Anzahl von Iterationen wurde erreicht,
- ein vorbestimmter Vorhersagefehlerwert durch mindestens eine der Netzkonfigurationsvarianten wurde erreicht.

Auf diese Weise kann iterativ die jeweils aktuelle Menge an Netzkonfigurationen, die für die betreffende Anwendung geeignet ist, an die Pareto-Front von optimierten Netzkonfigurationen approximiert werden.

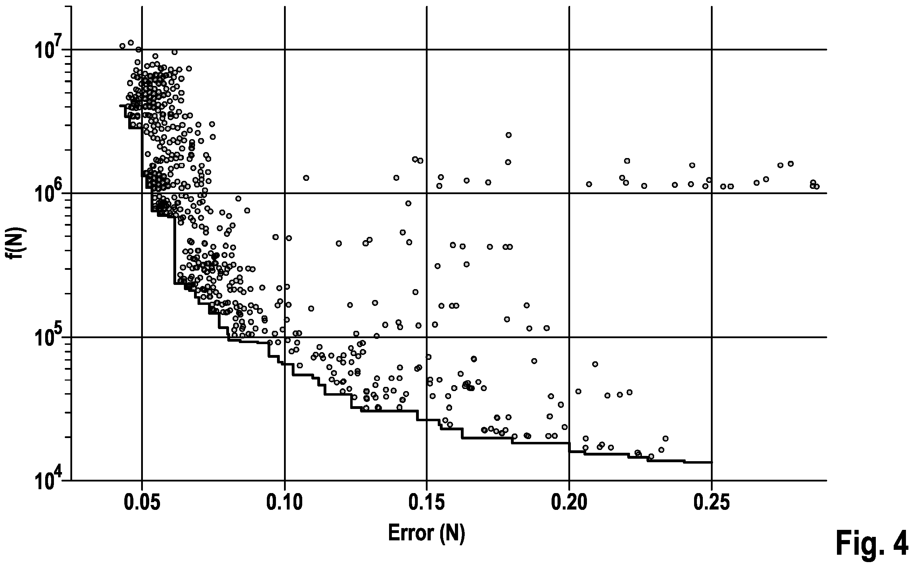

In Figur 4 ist beispielsweise der Verlauf einer Pareto-Front einer Menge von Netzkonfigurationen hinsichtlich des Vorhersagefehlers error(N) und den Ressourcenkosten hinsichtlich mindestens eines weiteren Optimierungsziels f(N) dargestellt. Die nach dem letzten Iterationszyklus ermittelten Netzkonfigurationen der aktuellen Netzkonfigurationsmenge stellen nun eine Grundlage dar, eine geeignete Netzkonfiguration für die durch die Trainingsdaten bestimmte Anwendung auszuwählen. Dies erfolgt durch Vorgeben einer Gesamtkostenfunktion, die den Vorhersagefehler und die Ressourcenkosten berücksichtigt, erfolgen. In der Praxis würde man auf Basis der betreffenden Anwendung entscheiden, welches Netzkonfiguration der aktuellen Netzkonfigurationsmenge (aktuelle Pareto-Front) am besten für die gewählte Anwendung geeignet ist. Dies kann anhand einer Beschränkungsvorgabe erfolgen. Als Beispielszenario kann aus der Pareto-Front eine Netzkonfiguration ausgewählt werden, die eine Netzwerkgröße von z.B. 1GB Speicher nicht übersteigt.

Das obige Verfahren ermöglicht in verbesserter Weise die Architektursuche von Netzkonfigurationen zu beschleunigen, da die Evaluierung der Leistungsfähigkeit Vorhersagefehler der Varianten von Netzkonfigurationen erheblich schneller vorgenommen werden kann.

Die so ermittelten Netzkonfigurationen können für die Auswahl einer geeigneten Konfiguration eines neuronalen Netzes für eine vorgegebene Aufgabe verwendet werden. Die Optimierung der Netzkonfiguration steht in engem Zusammenhang zu der gestellten Aufgabe. Die Aufgabe ergibt sich durch die Vorgabe von Trainingsdaten, so dass vor dem eigentlichen Training zunächst die Trainingsdaten definiert werden müssen, aus denen die optimierte/geeignete Netzkonfiguration für die gestellte Aufgabe ermittelt wird. Beispielsweise können Bilderkennungs- bzw. -klassifkationsverfahren durch Trainingsdaten definiert werden, die Eingangsbilder, Objektzuordnungen, Objektklassifikationen beinhalten. Netzkonfigurationen können auf diese Weise grundsätzlich für alle durch Trainingsdaten definierten Aufgaben bestimmt werden.

Erfindungsgemäß wird ein derart konfiguriertes neuronales Netz in einem Steuergerät eines technischen Systems, insbesondere in einem Roboter, einem Fahrzeug, einem Werkzeug oder einer Werkmaschine eingesetzt, um abhängig von Eingangsgrößen Ausgangsgrößen zu bestimmen. Die Ausgangsgrößen können beispielsweise eine Klassifizierung der Eingangsgröße (d.h. z.B. eine Zuordnung der Eingangsgröße zu einer Klasse einer vorgebbaren Mehrzahl von Klassen) und in dem Fall, dass die Eingangsdaten Bilddaten umfassen, eine insbesondere pixelweise semantische Segmentierung dieser Bilddaten (d.h. z.B. eine bereichs- oder pixelweise Zuordnung von Ausschnitten der Bilddaten zu einer Klasse einer vorgebbaren Mehrzahl von Klassen) umfassen. Als Eingangsgrößen des neuronalen Netzes kommen insbesondere Sensordaten oder abhängig von Sensordaten ermittelte Größen in Frage. Die Sensordaten können von Sensoren des technischen Systems stammen oder von dem technischen System von extern empfangen werden. Die Sensoren können insbesondere mindestens einen Videosensor und/oder mindestens einen Radarsensor und/oder mindestens einen LiDAR-Sensor und/oder mindestens einen Ultraschallsensor umfassen. Abhängig von den Ausgangsgrö-ßen des neuronalen Netzes kann durch eine Recheneinheit des Steuergeräts des technischen Systems mindestens ein Aktor des technischen Systems mit einem Ansteuersignal angesteuert werden. Beispielsweise kann so eine Bewegung eines Roboters oder Fahrzeugs gesteuert werden oder eine Steuerung einer Antriebseinheit oder eines Fahrerassistenzsystems eines Fahrzeugs erfolgen.

## Patentansprüche

1. Computerimplementiertes Verfahren zum Ermitteln einer geeigneten Netzkonfiguration für ein neuronales Netz für eine Berechnungshardware und für eine vorgegebene Anwendung, insbesondere zur Realisierung von Funktionen eines technischen Systems, insbesondere eines Roboters, eines Fahrzeugs, eines Werkzeugs oder einer Werkmaschine, wobei die vorgegebene Anwendung in Form von Trainingsdaten bestimmt ist; wobei die Netzkonfiguration die Architektur des neuronalen Netzes angibt, mit folgenden Schritten:

   a) Bereitstellen (S1) einer aktuellen Netzkonfigurationsmenge mit Netzkonfigurationen, wobei die aktuelle Netzkonfigurationsmenge einer Pareto-Menge hinsichtlich eines Vorhersagefehlers und mindestens eines weiteren Optimierungsziels entspricht, wobei das weitere Optimierungsziel Ressourcenkosten der Netzkonfiguration auf der Berechnungshardware charakterisiert, wobei die Ressourcenkosten eine Speichergröße, Auswertungsgeschwindigkeit, Kompatibilität bezüglich spezieller Hardware oder ein Auswertungsenergieverbrauch sind;
   b) Bereitstellen (S2) einer Menge von Netzkonfigurationsvarianten abhängig von Variationen der Netzkonfigurationen der aktuellen Netzkonfigurationsmenge;
   c) Auswählen einer Untermenge von Netzkonfigurationen (S3) aus der Menge der bereitgestellten Netzkonfigurationsvarianten abhängig von einer Wahrscheinlichkeitsverteilung (p), wobei die Wahrscheinlichkeitsverteilung (p) eine Verteilung der aktuellen Netzkonfigurationsmenge, insbesondere Pareto-Menge, hinsichtlich des mindestens einem weiteren Optimierungsziels charakterisiert;
   d) Trainieren (S4) von neuronalen Netzen jeder der ausgewählten Netzkonfigurationen und Bestimmen eines entsprechenden Vorhersagefehlers ($error(N)$);
   e) Aktualisieren (S5) der aktuellen Netzkonfigurationsmenge abhängig von den Vorhersagefehlern und dem mindestens einen weiteren Optimierungsziel der Netzkonfigurationsmenge und der ausgewählten Netzkonfigurationen; und
   f) Auswählen der geeigneten Netzkonfiguration aus der aktuellen Netzkonfigurationsmenge, wobei die geeignete Netzkonfiguration aus der aktuellen Netzkonfigurationsmenge basierend auf einer Gesamtkostenfunktion ausgewählt wird, die von dem Vorhersagefehler und den Ressourcenkosten abhängt.

2. Verfahren nach Anspruch 1, wobei die Untermenge der Netzkonfigurationen aus der Menge von Netzkonfigurationsvarianten abhängig von einer Wahrscheinlichkeitsverteilung (p) ausgewählt wird,

   wobei die Wahrscheinlichkeitsverteilung (p) antiproportional zu einer Dichteschätzung ($p_{kde}$) ist, wobei die Dichteschätzung ($p_{kde}$) abhängig von der aktuellen Netzkonfigurationsmenge, insbesondere der Pareto-Menge, berechnet wird, insbesondere eine Dichte der aktuellen Netzkonfigurationsmenge hinsichtlich des mindestens einem weiteren Optimierungsziels charakterisiert..

**3.** Verfahren nach Anspruch 1 oder 2, wobei die Schritte a) bis e) iterativ mehrfach durchgeführt werden, wobei das Verfahren beendet wird (S6), wenn eine Abbruchbedingung erfüllt ist (S6), wobei die Abbruchbedingung das Eintreten mindestens eines der folgenden Ereignisse beinhaltet:

- eine vorbestimmte Anzahl von Iterationen wurde erreicht,
- ein vorbestimmter Wert des Vorhersagefehlers ($error(N)$) durch mindestens eine der Netzkonfigurationsvarianten wurde erreicht.

**4.** Verfahren nach einem der Ansprüche 1 bis 3, wobei diejenigen Netzkonfigurationen aus der Menge von Netzkonfigurationsvarianten ausgewählt werden, die abhängig von der Wahrscheinlichkeitsverteilung der Netzkonfigurationen der aktuellen Netzkonfigurationsmenge die geringsten Wahrscheinlichkeiten aufweisen.

**5.** Verfahren nach Anspruch 4, wobei die Netzkonfigurationen aus der Menge von Netzkonfigurationsvarianten abhängig von einer aus der aktuellen Konfigurationsmenge ermittelten Dichteschätzung, insbesondere einer Kerndichteschätzung, ausgewählt werden.

**6.** Verfahren nach einem der Ansprüche 1 bis 5, wobei die Trainingsdaten durch Eingangsgrößenvektoren und diesen zugeordneten Ausgangsgrößenvektoren vorgegeben sind, wobei der Vorhersagefehler der jeweiligen Netzkonfiguration als ein Maß bestimmt wird, dass sich aus den jeweiligen Abweichungen zwischen Modellwerten, die sich durch das durch die jeweilige Netzkonfiguration bestimmten neuronalen Netzes basierend auf den Eingangsgrößenvektoren ergeben, und den den Eingangsgrößenvektoren zugeordneten Ausgangsgrößenvektoren ergibt.

**7.** Verfahren nach einem der Ansprüche 1 bis 6, wobei die Vorhersagefehler für die ausgewählten Netzkonfigurationen durch ein Trainieren mit den Trainingsdaten unter gemeinsamen vorbestimmten Trainingsbedingungen ermittelt werden, wobei die Trainingsbedingungen eine Anzahl von Trainingsdurchläufen und/oder eine Trainingszeit und/oder eine Trainingsmethode vorgeben.

**8.** Verfahren nach einem der Ansprüche 1 bis 7, wobei das Aktualisieren der aktuellen Netzkonfigurationsmenge so durchgeführt wird, dass eine aktualisierte Netzkonfigurationsmenge nur diejenigen Netzkonfigurationen aus der aktuellen Netzkonfigurationsmenge und aus den ausgewählten Netzkonfigurationen enthält, die bezüglich des Vorhersagefehlers und mindestens eines des einen oder der mehreren Optimierungsziele besser sind als jede der übrigen Netzkonfigurationen.

**9.** Verfahren nach einem der Ansprüche 1 bis 8, wobei das Aktualisieren der aktuellen Netzkonfigurationsmenge durchgeführt wird, indem der aktuellen Netzkonfigurationsmenge die ausgewählten Netzkonfigurationen hinzugefügt werden, um eine erweiterte Netzkonfigurationsmenge zu erhalten, und anschließend aus der erweiterten Netzkonfigurationsmenge diejenigen Netzkonfigurationen entfernt werden, die bezüglich des Vorhersagefehlers und aller der einen oder der mehreren Optimierungsziele schlechter sind als mindestens eine der übrigen Netzkonfigurationen, um die aktualisierte Netzkonfigurationsmenge zu erhalten.

**10.** Computerimplementiertes Verfahren zum Bereitstellen eines neuronalen Netzes mit einer Netzkonfiguration, die mit einem Verfahren nach einem der Ansprüche 1 bis 9 erstellt worden ist, wobei das neuronale Netz zum Steuern eines technischen Systems, insbesondere eines Roboters, eines Fahrzeugs, eines Werkzeugs oder einer Werkmaschine, wobei die Netzkonfiguration eingesetzt wird.

**11.** Verwendung eines Computerimplementierten neuronalen Netzes zur Steuerung eines technischen Systems, insbesondere eines Roboters, eines Fahrzeugs, eines Werkzeugs oder einer Werkmaschine, wobei die Netzkonfiguration des neuronalen Netzes mit dem Verfahren nach einem der Ansprüche 1 bis 9 erstellt worden ist.

**12.** Vorrichtung zum Ermitteln einer geeigneten Netzkonfiguration für ein neuronales Netz für eine Berechnungshardware und für eine vorgegebene Anwendung, insbesondere zur Realisierung von Funktionen eines technischen Systems, insbesondere eines Roboters, eines Fahrzeugs, eines Werkzeugs oder einer Werkmaschine, wobei die Anwendung in Form von Trainingsdaten bestimmt ist; wobei die Netzkonfiguration die Architektur des neuronalen Netzes angibt, wobei die Vorrichtung zum Durchführen der folgenden Schritte ausgebildet ist:

a) Bereitstellen (S1) einer aktuellen Netzkonfigurationsmenge mit Netzkonfigurationen, wobei die aktuelle Netzkonfigurationsmenge einer Pareto-Menge hinsichtlich eines Vorhersagefehlers und mindestens eines weiteren Optimierungsziels entspricht, wobei das weitere Optimierungsziel Ressourcenkosten der Netzkonfiguration auf einer Berechnungshardware charakterisiert, wobei die Ressourcenkosten eine Speichergröße, Auswertungsgeschwindigkeit, Kompatibilität bezüglich spezieller Hardware oder ein Auswertungsenergieverbrauch sind;
b) Bereitstellen (S2) einer Menge von Netzkonfigurationsvarianten;
c) Auswählen (S3) von Netzkonfigurationen aus der Menge von Netzkonfigurationsvarianten abhängig von einer Wahrscheinlichkeitsverteilung der Netzkonfigurationen der aktuellen Netzkonfigurationsmenge bezüglich des mindestes einen weiteren Optimierungsziels;
d) Trainieren (S4) von neuronalen Netzen jeder der ausgewählten Netzkonfigurationen und Bestimmen eines entsprechenden Vorhersagefehlers (*error*(*N*));
e) Aktualisieren (S5) der aktuellen Netzkonfigurationsmenge abhängig von den Vorhersagefehlern und dem mindestens einen weiteren Optimierungsziel der Netzkonfigurationsmenge und der ausgewählten Netzkonfigurationen; und
f) Auswählen der geeigneten Netzkonfiguration aus der aktuellen Netzkonfigurationsmenge, wobei die geeignete Netzkonfiguration aus der aktuellen Netzkonfigurationsmenge basierend auf einer Gesamtkostenfunktion ausgewählt wird, die von dem Vorhersagefehler und den Ressourcenkosten abhängt.

13. Computerprogramm, welches Befehle umfasst, die eingerichtet sind, wenn diese Befehle auf einem Computer ausgeführt werden, dass der Computer das Verfahren nach einem der Ansprüche 1 bis 9 ausführt.

14. Elektronisches Speichermedium, auf welchem ein Computerprogramm nach Anspruch 13 gespeichert ist.

**Claims**

1. Computer-implemented method for determining a suitable network configuration for a neural network for calculation hardware and for a predefined application, in particular for implementing functions of a technical system, in particular a robot, a vehicle, a tool or a factory machine, wherein the predefined application is determined in the form of training data; wherein the network configuration indicates the architecture of the neural network, said method having the following steps of:

   a) providing (S1) a current network configuration set having network configurations,
   wherein the current network configuration set corresponds to a Pareto set in terms of a prediction error and at least one further optimization goal, wherein the further optimization goal characterizes resource costs of the network configuration on the calculation hardware, wherein the resource costs are a memory size, evaluation speed, compatibility in terms of special hardware or an evaluation energy consumption;
   b) providing (S2) a set of network configuration variants on the basis of variations of the network configurations in the current network configuration set;
   c) selecting a subset of network configurations (S3) from the set of provided network configuration variants on the basis of a probability distribution (p),
   wherein the probability distribution (p) characterizes a distribution of the current network configuration set, in particular Pareto set, in terms of the at least one further optimization goal;
   d) training (S4) neural networks of each of the selected network configurations and determining a corresponding prediction error (error(N));
   e) updating (S5) the current network configuration set on the basis of the prediction errors and the at least one further optimization goal of the network configuration set and the selected network configurations; and
   f) selecting the suitable network configuration from the current network configuration set, wherein the suitable network configuration is selected from the current network configuration set on the basis of a total cost function which depends on the prediction error and the resource costs.

2. Method according to Claim 1, wherein the subset of network configurations is selected from the set of network configuration variants on the basis of a probability distribution (p),

   wherein the probability distribution (p) is antiproportional to a density estimation ($p_{kde}$),
   wherein the density estimation ($p_{kde}$) is calculated on the basis of the current network configuration set, in particular the Pareto set, in particular characterizes a density of the current network configuration set in terms of the at least one further optimization goal.

3. Method according to Claim 1 or 2, wherein steps a) to e) are iteratively carried out multiple times,
   wherein the method is terminated (S6) if a termination condition has been met (S6), wherein the termination condition comprises the occurrence of at least one of the following events:

- a predetermined number of iterations has been reached,
- a predetermined value of the prediction error (error(N)) has been reached by at least one of the network configuration variants.

4. Method according to one of Claims 1 to 3, wherein those network configurations which have the lowest probabilities on the basis of the probability distribution of the network configurations in the current network configuration set are selected from the set of network configuration variants.

5. Method according to Claim 4, wherein the network configurations are selected from the set of network configuration variants on the basis of a density estimation, in particular a core density estimation, determined from the current configuration set.

6. Method according to one of Claims 1 to 5, wherein the training data are predefined by input variable vectors and output variable vectors assigned to the latter, wherein the prediction error of the respective network configuration is determined as a measure which results from the respective discrepancies between model values, which result from the neural network determined by the respective network configuration on the basis of the input variable vectors, and the output variable vectors assigned to the input variable vectors.

7. Method according to one of Claims 1 to 6, wherein the prediction errors for the selected network configurations are determined by means of training with the training data under common predetermined training conditions, wherein the training conditions predefine a number of training runs and/or a training time and/or a training method.

8. Method according to one of Claims 1 to 7, wherein the current network configuration set is updated in such a manner that an updated network configuration set contains only those network configurations from the current network configuration set and from the selected network configurations which are better, in terms of the prediction error and at least one of the one or more optimization goals, than any of the other network configurations.

9. Method according to one of Claims 1 to 8, wherein the current network configuration set is updated by adding the selected network configurations to the current network configuration set in order to obtain an extended network configuration set, and those network configurations which are worse, in terms of the prediction error and all of the one or more optimization goals, than at least one of the other network configurations are then removed from the extended network configuration set in order to obtain the updated network configuration set.

10. Computer-implemented method for providing a neural network having a network configuration which has been created using a method according to one of Claims 1 to 9, wherein the neural network to control a technical system, in particular a robot, a vehicle, a tool or a factory machine, wherein the network configuration is used.

11. Use of a computer-implemented neural network for controlling a technical system, in particular a robot, a vehicle, a tool or a factory machine, wherein the network configuration of the neural network has been created using the method according to one of Claims 1 to 9.

12. Apparatus for determining a suitable network configuration for a neural network for calculation hardware and for a predefined application, in particular for implementing functions of a technical system, in particular a robot, a vehicle, a tool or a factory machine, wherein the application is determined in the form of training data; wherein the network configuration indicates the architecture of the neural network, wherein the apparatus is designed to carry out the following steps of:

a) providing (S1) a current network configuration set having network configurations, wherein the current network configuration set corresponds to a Pareto set in terms of a prediction error and at least one further optimization goal, wherein the further optimization goal characterizes resource costs of the network configuration on calculation hardware, wherein the resource costs are a memory size, evaluation speed, compatibility in terms of special hardware or an evaluation energy consumption;
b) providing (S2) a set of network configuration variants;
c) selecting (S3) network configurations from the set of network configuration variants on the basis of a probability distribution of the network configurations in the current network configuration set in terms of the at least one further optimization goal;

d) training (S4) neural networks of each of the selected network configurations and determining a corresponding prediction error (error(N));

e) updating (S5) the current network configuration set on the basis of the prediction errors and the at least one further optimization goal of the network configuration set and the selected network configurations; and

f) selecting the suitable network configuration from the current network configuration set, wherein the suitable network configuration is selected from the current network configuration set on the basis of a total cost function which depends on the prediction error and the resource costs.

**13.** Computer program comprising instructions which are configured such that, when these instructions are executed on a computer, the computer carries out the method according to one of Claims 1 to 9.

**14.** Electronic storage medium on which a computer program according to Claim 13 is stored.

**Revendications**

**1.** Procédé mis en œuvre par ordinateur pour déterminer une configuration de réseau appropriée pour un réseau neuronal pour un matériel de calcul et pour une application prédéfinie, en particulier pour la réalisation de fonctions d'un système technique, en particulier d'un robot, d'un véhicule, d'un outil ou d'une machine-outil, dans lequel l'application prédéfinie est déterminée sous forme de données d'apprentissage ; dans lequel la configuration de réseau indique l'architecture du réseau neuronal, comprenant les étapes suivantes :

a) la fourniture (S1) d'un ensemble actuel de configurations de réseau comprenant des configurations de réseau, dans lequel l'ensemble actuel de configurations de réseau correspond à un ensemble de Pareto en ce qui concerne une erreur de prédiction et au moins un autre objectif d'optimisation, dans lequel l'autre objectif d'optimisation caractérise des coûts de ressources de la configuration de réseau sur le matériel de calcul, dans lequel les coûts de ressources sont une taille de mémoire, une vitesse d'évaluation, une compatibilité par rapport à un matériel spécifique ou une consommation d'énergie d'évaluation ;

b) la fourniture (S2) d'un ensemble de variantes de configurations de réseau en fonction de variations des configurations de réseau de l'ensemble actuel de configurations de réseau ;

c) la sélection d'un sous-ensemble de configurations de réseau (S3) parmi l'ensemble des variantes de configurations de réseau fournies, en fonction d'une distribution de probabilités (p),

dans lequel la distribution de probabilités (p) caractérise une distribution de l'ensemble actuel de configurations de réseau, en particulier l'ensemble de Pareto, par rapport audit au moins un autre objectif d'optimisation ;

d) l'apprentissage (S4) de réseaux neuronaux de chacune des configurations de réseau sélectionnées et la détermination d'une erreur de prédiction (*error(N)*) correspondante ;

e) la mise à jour (S5) de l'ensemble actuel de configurations de réseau en fonction des erreurs de prédiction et dudit au moins un autre objectif d'optimisation de l'ensemble de configurations de réseau et des configurations de réseau sélectionnées ; et

f) la sélection de la configuration de réseau appropriée parmi l'ensemble actuel de configurations de réseau, dans lequel la configuration de réseau appropriée est sélectionnée parmi l'ensemble actuel de configurations de réseau sur la base d'une fonction de coût total qui dépend de l'erreur de prédiction et du coût de ressources.

**2.** Procédé selon la revendication 1, dans lequel le sous-ensemble de configurations de réseau est sélectionné parmi l'ensemble de variantes de configurations de réseau en fonction d'une distribution de probabilités (p),

dans lequel la distribution de probabilités (p) est inversement proportionnelle à une estimation de densité ($p_{kde}$), dans lequel l'estimation de densité ($p_{kde}$) est calculée en fonction de l'ensemble actuel de configurations de réseau, en particulier de l'ensemble de Pareto, caractérisant en particulier une densité de l'ensemble actuel de configurations de réseau par rapport audit au moins un autre objectif d'optimisation.

**3.** Procédé selon la revendication 1 ou 2, dans lequel les étapes a) à e) sont exécutées plusieurs fois de manière itérative, dans lequel le procédé est interrompu (S6) lorsqu'une condition d'interruption est satisfaite (S6), dans lequel la condition d'interruption implique la survenue d'au moins l'un des événements suivants :

- un nombre prédéterminé d'itérations a été atteint,
- une valeur prédéterminée de l'erreur de prédiction (*error(N)*) par au moins l'une des variantes de configurations de réseau a été atteinte.

4. Procédé selon l'une des revendications 1 à 3, dans lequel on sélectionne celles des configurations de réseau parmi l'ensemble de variantes de configurations de réseau qui présentent les probabilités les plus faibles en fonction de la distribution de probabilités des configurations de réseau de l'ensemble actuel de configurations de réseau.

5. Procédé selon la revendication 4, dans lequel les configurations de réseau sont sélectionnées parmi l'ensemble de variantes de configurations de réseau en fonction d'une estimation de densité, en particulier d'une estimation de densité de noyau, déterminée à partir de l'ensemble actuel de configurations.

6. Procédé selon l'une des revendications 1 à 5, dans lequel les données d'apprentissage sont prédéfinies par des vecteurs de grandeurs d'entrée et des vecteurs de grandeurs de sortie qui leur sont associés, dans lequel l'erreur de prédiction de la configuration de réseau respective est déterminée comme étant une mesure qui résulte des écarts respectifs entre des valeurs modélisées qui résultent du réseau neuronal déterminé par la configuration de réseau respective sur la base des vecteurs de grandeurs d'entrée, et les vecteurs de grandeurs de sortie associés aux vecteurs de grandeurs d'entrée.

7. Procédé selon l'une des revendications 1 à 6, dans lequel les erreurs de prédiction pour les configurations de réseau sélectionnées sont déterminées par un apprentissage utilisant des données d'apprentissage dans des conditions d'apprentissage communes prédéterminées, dans lequel les conditions d'apprentissage définissent un nombre de passages d'apprentissage et/ou une durée d'apprentissage et/ou une méthode d'apprentissage.

8. Procédé selon l'une des revendications 1 à 7, dans lequel la mise à jour de l'ensemble actuel de configurations de réseau est effectuée de telle sorte qu'un ensemble de configurations de réseau mis à jour ne contienne que les configurations de réseau, provenant de l'ensemble actuel de configurations de réseau et des configurations de réseau sélectionnées, qui sont meilleures que chacune des autres configurations de réseau en ce qui concerne l'erreur de prédiction et au moins l'un desdits un ou plusieurs objectifs d'optimisation.

9. Procédé selon l'une des revendications 1 à 8, dans lequel la mise à jour de l'ensemble actuel de configurations de réseau est effectuée en ajoutant à l'ensemble actuel de configurations de réseau les configurations de réseau sélectionnées afin d'obtenir un ensemble étendu de configurations de réseau, et en retirant ensuite de l'ensemble de configurations de réseau étendu les configurations de réseau qui sont moins satisfaisantes qu'au moins l'une des configurations de réseau restantes en ce qui concerne l'erreur de prédiction et l'ensemble des objectifs d'optimisation, afin d'obtenir l'ensemble mis à jour de configurations de réseau.

10. Procédé mis en œuvre par ordinateur pour fournir un réseau neuronal ayant une configuration de réseau créée par un procédé selon l'une des revendications 1 à 9, dans lequel le réseau neuronal pour commander un système technique, en particulier un robot, un véhicule, un outil ou une machine-outil, dans lequel la configuration de réseau est mise en oeuvre.

11. Utilisation d'un réseau neuronal mis en œuvre par ordinateur pour commander un système technique, en particulier un robot, un véhicule, un outil ou une machine-outil, dans lequel la configuration de réseau du réseau neuronal a été créée par le procédé selon l'une des revendications 1 à 9.

12. Dispositif pour déterminer une configuration de réseau appropriée pour un réseau neuronal pour un matériel de calcul et pour une application prédéfinie, en particulier pour la réalisation de fonctions d'un système technique, en particulier d'un robot, d'un véhicule, d'un outil ou d'une machine-outil, dans lequel l'application est déterminée sous forme de données d'apprentissage ; dans lequel la configuration de réseau indique l'architecture du réseau neuronal, dans lequel le dispositif est conçu pour effectuer les étapes suivantes :

a) la fourniture (S1) d'un ensemble actuel de configurations de réseau comprenant des configurations de réseau, dans lequel l'ensemble actuel de configurations de réseau correspond à un ensemble de Pareto en ce qui concerne une erreur de prédiction et au moins un autre objectif d'optimisation, dans lequel l'autre objectif d'optimisation caractérise des coûts de ressources de la configuration de réseau sur un matériel de calcul, dans lequel les coûts de ressources sont une taille de mémoire, une vitesse d'évaluation, une compatibilité par rapport à un matériel spécifique ou une consommation d'énergie d'évaluation ;
b) la fourniture (S2) d'un ensemble de variantes de configurations de réseau ;
c) la sélection (S3) de configurations de réseau parmi l'ensemble de variantes de configurations de réseau en fonction d'une distribution de probabilités des configurations de réseau de l'ensemble actuel de configurations de réseau par rapport audit au moins un autre objectif d'optimisation ;

d) l'apprentissage (S4) de réseaux neuronaux de chacune des configurations de réseau sélectionnées et la détermination d'une erreur de prédiction (*error*(*N*)) correspondante.

e) la mise à jour (S5) de l'ensemble actuel de configurations de réseau en fonction des erreurs de prédiction et dudit au moins un autre objectif d'optimisation de l'ensemble de configurations de réseau et des configurations de réseau sélectionnées ; et

f) la sélection de la configuration de réseau appropriée parmi l'ensemble actuel de configurations de réseau, dans lequel la configuration de réseau appropriée est sélectionnée parmi l'ensemble actuel de configurations de réseau sur la base d'une fonction de coût total qui dépend de l'erreur de prédiction et du coût de ressources.

13. Programme d'ordinateur comprenant des instructions qui sont conçues, lorsque lesdites instructions sont exécutées sur un ordinateur, pour que ledit ordinateur mette en œuvre le procédé selon l'une des revendications 1 à 9.

14. Support de stockage électronique sur lequel est stocké un programme d'ordinateur selon la revendication 13.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Neural networks designing neural networks: Multi-objective hyper-parameter optimization. **SMITHSON et al.** 2016 IEEE/ACM INTERNATIONAL CONFERENCE ON COMPUTER-AIDED DESIGN (ICCAD). ACM, 07. November 2016